# EUROPÄISCHE PATENTSCHRIFT

(11) **EP 0 934 476 B1**
(45) Veröffentlichungstag und Bekanntmachung des Hinweises auf die Patenterteilung: **02.01.2002**
(21) Anmeldenummer: 97945825.4
(22) Anmeldetag: 14.10.1997
(51) Int. Cl.: F16G 13/16

(54) **KETTENGLIED UND ENERGIEFÜHRUNGSKETTE MIT VERRASTBARER TRAVERSE**
CHAIN LINK AND ENERGY-CONVEYING CHAIN WITH LOCKABLE CROSS BEAM
CHAINON ET CHAINE DE TRANSPORT D'ENERGIE A TRAVERSE ENCLENCHABLE

(30) Priorität: 04.11.1996 DE 19645403
(43) Veröffentlichungstag der Anmeldung: 11.08.1999
(73) Patentinhaber: Kabelschlepp Gesellschaft mit beschränkter Haftung, 57074 Siegen (DE)
(72) Erfinder: WEBER, Willibald, D-57250 Netphen (DE)
(74) Vertreter: Kahlhöfer, Hermann, Dipl.-Phys.
(86) Internationale Anmeldenummer: EP9705640
(87) Internationale Veröffentlichungsnummer: WO9820265

(56) Entgegenhaltungen:
- EP-A- 0 126 862
- EP-A- 0 499 809
- DE-A- 4 313 075
- US-A- 4 590 961

## Beschreibung

Der Gegenstand der Erfindung bezieht sich auf ein Kettenglied für eine Energieführungskette mit Kettengliedern mit wenigstens einer verrastbaren Traverse.

Durch die DE 43 13 075 A1, als nächster Stand der Technik nach dem Oberbegriff des Anspruchs 1, ist ein Kettenglied für eine Energieführungskette bekannt, das zwei voneinander beabstandete einander gegenüberliegende Kettenlaschen aufweist. Die Kettenlaschen sind durch eine Traverse miteinander verbunden. Die Verbindung der Traverse mit den Seitenlaschen erfolgt mittels lösbarer Scharniere. Die Traverse ist mit den Kettenlaschen verrastbar. Hierzu weist die Traverse nach der DE 43 13 075 A1 Rastmittel auf, die mit entsprechenden Rastmitteln der Kettenlaschen zusammenwirken. Im Konkreten wird durch die DE 43 13 075 A1 vorgeschlagen, daß die Traversen beiderseitig jeweils Ansätze aufweisen, die mit im Querschnitt runden Lagerzapfen verbunden sind. Die Kettenlaschen weisen Schlitze zur Aufnahme der Ansätze auf. Im Bereich der Schlitze haben die Seitenlaschen Lagerausnehmungen zur rastenden Aufnahme und Führung der Lagerzapfen. Durch diese Ausgestaltung der Scharniere wird ein Verschwenken der Traverse um 180° ermöglicht, wobei die Traverse in jeder beliebigen Schwenkstellung abnehmbar ist.

Durch die DE 33 18 365 C2 ist eine weitere Ausführungsform eines Kettengliedes für eine Energieführungskette bekannt. Das Kettenglied weist zwei voneinander beabstandete einander gegenüberliegende Kettenlaschen auf, die über einen Schließbügel miteinander verbindbar sind. Der Schließbügel ist an einer Kettenlasche mit einem lösbaren Scharnier angelenkt und an der anderen Kettenlasche mit einem elastischen Haken verriegelbar. Zur Ausgestaltung des Scharniers schlägt die DE 33 18 365 C2 vor, daß dieses aus einer in die freie Kante einer Kettenlasche freiliegend eingeformten Gelenkachse mit senkrecht zu den Kettenlaschen abgeflachtem Kreisquerschnitt und abgerundeten Schmalseiten und aus einer in das Ende des Schließbügels eingeformten, mit Hinterschneidungen versehenen, angeschnittenen, teilkreisförmigen Ausnehmungen besteht. Durch diese Ausgestaltung des Schließbügels wird die Möglichkeit geschaffen, daß nach dem Aufstecken des Schließbügels auf die Gelenkachse und Verschwenken in Richtung auf die gegenüberliegende Kettenlasche der Schließbügel kraft- und formschlüssig mit der Gelenkachse verspannt ist. Ein solcher Schließbügel ist einseitig verschwenkbar.

Zielsetzung der vorliegenden Erfindung ist es ein Kettenglied für eine Energieführungskette anzugeben, bei dem eine die Kettenlaschen verbindbare Traverse sowohl um die eine Kettenlasche als auch um die andere verschwenkbar ist, wobei zumindest eine einseitige Verrastbarkeit der Traverse mit einer Kettenlasche möglich sein soll. Ein weiteres Ziel der Erfindung ist es eine Energieführungskette anzugeben, bei der die Einführung und Entfernung von Versorgungsleitungen möglich ist.

Das erfindungsgemäße Kettenglied für eine Energieführungskette weist zwei voneinander beabstandete einander gegenüberliegende Kettenlaschen auf. Das Kettenglied weist ferner wenigstens eine Traverse auf. Mindestens eine der Traversen ist beiderend mittels eines lösbaren Scharniers mit den Kettenlaschen verbindbar. Die Traverse ist mit wenigstens einer Kettenlasche verrastbar. Zur Verrastung der Traverse mit wenigstens einer Kettenlasche wird vorgeschlagen, daß wenigstens ein Scharnier durch einen Gelenkzapfen und eine mit dem Gelenkzapfen zusammenwirkende Ausnehmung gebildet ist. Die Ausnehmung weist Hinterschneidungen auf. Der Gelenkzapfen des Scharniers hat wenigstens eine in eine Aussparung eingreifende Rastnase. Die Rastnase greift in die Aussparung ein, die sich wenigstens über einen Teilumfang der Ausnehmung erstreckt. Das erfindungsgemäße Kettenglied weist somit wenigstens ein zwei Funktionen erfüllendes Scharnier auf. Zum einen bildet das Scharnier eine gelenkige Verbindung zwischen der Traverse und einer Kettenlasche und zum anderen bildet das Scharnier eine rastende Verbindung zwischen der Traverse und einer Kettenlasche. Hierbei werden durch konstruktive Umgestaltungen der funktional wirkenden Bauteile eines Scharniers mit einfachen Mitteln die Doppelfunktionalität erreicht. Das Scharnier integriert sowohl die gelenkige - als auch die rastende Verbindung zwischen der Traverse und der Kettenlasche. Dadurch, daß auf dem Gelenkzapfen die Rastnase ausgebildet ist, werden keine zusätzlichen Hilfsmittel benötigt, die eine rastende Verbindung zwischen der Traverse und der Kettenlasche sicherstellen. Dies gilt auch für die Ausbildung der Ausnehmung mit einer Aussparung.

Nach einer vorteilhaften Ausgestaltung des Kettengliedes wird vorgeschlagen, daß der Gelenkzapfen eines jeden Scharniers an der Kettenlasche und die Ausnehmung an der Traverse ausgebildet sind. Der Gelenkzapfen ist dabei freiliegenden an der Kettenlasche ausgebildet. Die Kettenlasche mit dem Gelenkzapfen ist hierbei vorzugsweise einstückig aus Kunststoff, insbesondere aus einem faserverstärkten Kunststoff, hergestellt.

Um die rastende Verbindung zwischen der Traverse und der Kettenlasche bzw. den Kettenlasche zu vereinfachen wird vorgeschlagen, daß die Aussparung einen Durchbruch bildet, der einen Werkzeugeingriffsbereich aufweist. Der Werkzeugeingriffsbereich kann trapezartig ausgebildet sein, so daß beispielsweise die Spitze eines Schraubendrehers in den Werkzeugeingriffsbereich einbringbar ist und durch Ausübung einer Kraft die Traverse von der Kettenlasche lösbar ist, wobei sich das Werkzeug, wie beispielsweise ein Schraubendreher, auf dem Gelenkzapfen stützt.

Nach einer besonders vorteilhaften Ausgestaltung des erfindungsgemäßen Kettengliedes wird vorgeschlagen, daß die Rastnase sich nur über einen Teil der Länge des Gelenkzapfens erstreckt. Diese Ausgestaltung hat den Vorteil, daß die rastende Verbindung zum einen stark genug ist, um unbeabsichtigtes Öffnen der Traverse sicherzustellen, andererseits jedoch mit einem relativ geringen Kraftaufwand lösbar ist.

Bevorzugt ist hierbei eine symmetrische Ausgestaltung der Nase bezüglich einer Mittellinie des Gelenkzapfens.

Der Gelenkzapfen hat vorzugsweise einen im wesentlichen kreisförmigen Querschnitt. Die Ausnehmung, in die der Gelenkzapfen eingreift hat eine der Außenkontur des Gelenkzapfens angepaßte Innenkontur.

Nach einem anderem erfindungsgemäßen Gedankens wird eine Energieführungskette zur Führung von Versorgungsleitungen mit einer Anzahl gelenkig miteinander verbundenen Kettengliedern vorgeschlagen, bei der jedes Kettenglied zwei voneinander beabstandete einander gegenüberliegende Kettenlaschen und wenigstens eine Traverse aufweist. Mindestens eine Traverse ist beiderends mit lösbarem Scharnier mit den Kettenlaschen verbindbar. Mit wenigstens einer Kettenlasche der beiden Kettenlaschen ist die Traverse verrastbar. Zur Verrastung ist wenigstens ein Scharnier so ausgebildet, daß dieses einen Gelenkzapfen zusammenwirkende, Hinterschneidungen aufweisende, Ausnehmung gebildet ist. Der Gelenkzapfen weist wenigstens eine in eine Aussparung eingreifende Rastnase auf. Die Aussparung erstreckt sich wenigstens über einen Teilumfang der Ausnehmung. Weitere Vorteile und Einzelheiten des erfindungsgemaßen Kettengliedes werden anhand eines in der Zeichnung dargestellten Ausführungsbeispiels erläutert. Es zeigen:
- Fig. 1: ein Kettenglied in der Vorderansicht,
- Fig. 2: das Kettenglied nach Fig. 1 im Teilschnitt in der Draufsicht,
- Fig. 3: einen Schnitt durch das Kettenglied entlang der Schnittlinie A-A mit einer Traverse,
- Fig. 4: eine Traverse in der Draufsicht,
- Fig. 5: eine Schnittdarstellung entlang der Linie B-B nach Fig. 4,
- Fig. 6 und 7: vergrößert ein Scharnier, und
- Fig. 8: das Scharnier nach Fig. 6 bzw. 7 mit einer verschwenkten Traverse.

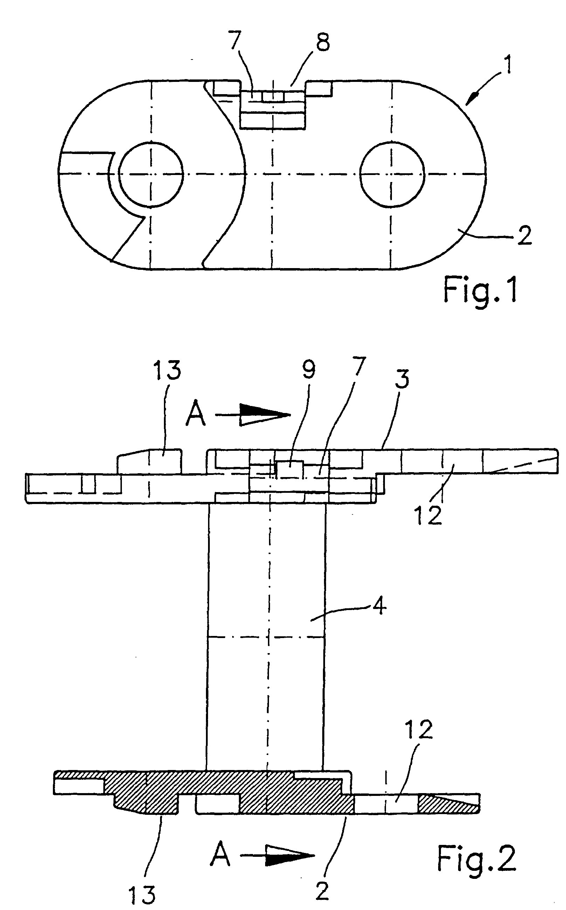

In den Fig. 1, 2 und 3 ist ein Kettenglied 1 dargestellt. Das Kettenglied 1 umfaßt zwei voneinander beabstandete einander gegenüberliegende Kettenlaschen 2, 3. Jede Kettenlasche 2, 3 weist eine Gelenkbohrung 12 und einen Gelenkbolzen 13 auf. Die Gelenkbohrung 12 einer jeden Kettenlasche 2, 3 ist so ausgebildet, daß in diese ein Gelenkbolzen 13 eines benachbarten Kettengliedes einführbar ist. Die Kettenlaschen 2, 3 sind durch einen Quersteg 4 miteinander verbunden. Die Kettenlaschen 2, 3 und der Quersteg 4 können einstückig ausgebildet sein.

Jede Kettenlasche 2, 3 weist eine Freiarbeitung 8 auf, in der ein Gelenkzapfen 6, 7 ausgebildet ist. Der Gelenkzapfen 7 weist eine Rastnase 9 auf, die sich lediglich über einen Teil der Länge des Gelenkzapfens 7 erstreckt. In dem dargestellten Ausführungsbeispiel weist der Gelenkzapfen 6 keine Rastnase 9 auf.

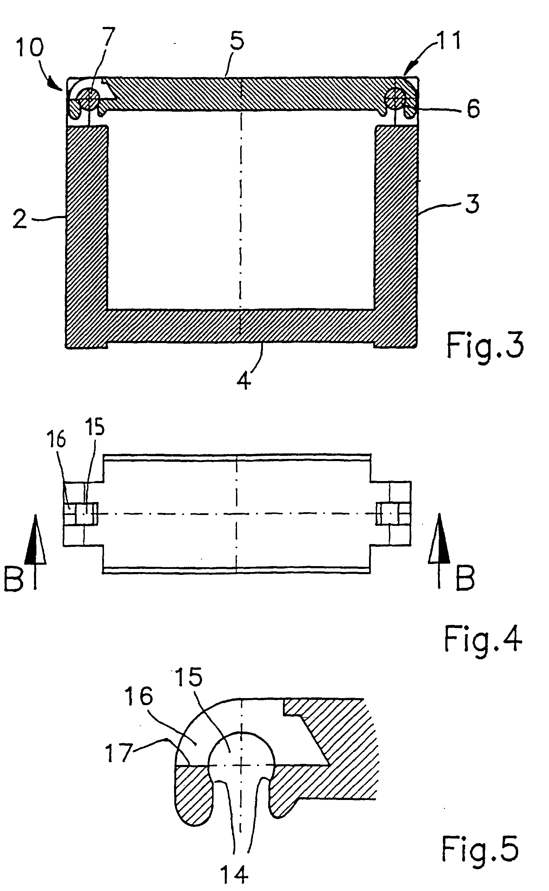

Wie insbesondere aus der Fig. 3 ersichtlich ist, sind die Seitenlaschen 2, 3 über eine Traverse 5 miteinander verbunden. Die Traverse 5 ist beiderseits mit lösbarem Scharnier 10, 11 mit der Kettenlasche 2 bzw. 3 verbunden. Das Scharnier 10 ist durch den Gelenkzapfen 7 mit einer Rastnase 9 und eine mit dem Gelenkzapfen 7 zusammenwirkende, Hinterschneidung 14 aufweisenden, Ausnehmung 15 gebildet. Die Ausnehmung 15 weist eine Aussparung 16 auf, in die die Rastnase 9 eingreift. Die Aussparung 16 weist eine Anschlagfläche 17 auf, an die ein Anschlag 18 zur Anlage bringbar ist. Die Rastnase 9 und die Aussparung 16 sind so zueinander ausgebildet, daß ein Verschwenken der Traverse 5 möglich ist, wobei ein Lösen der Verbindung zwischen der Traverse 5 und der Kettenlasche 2 nur unter Aufwendung einer Kraft möglich ist.

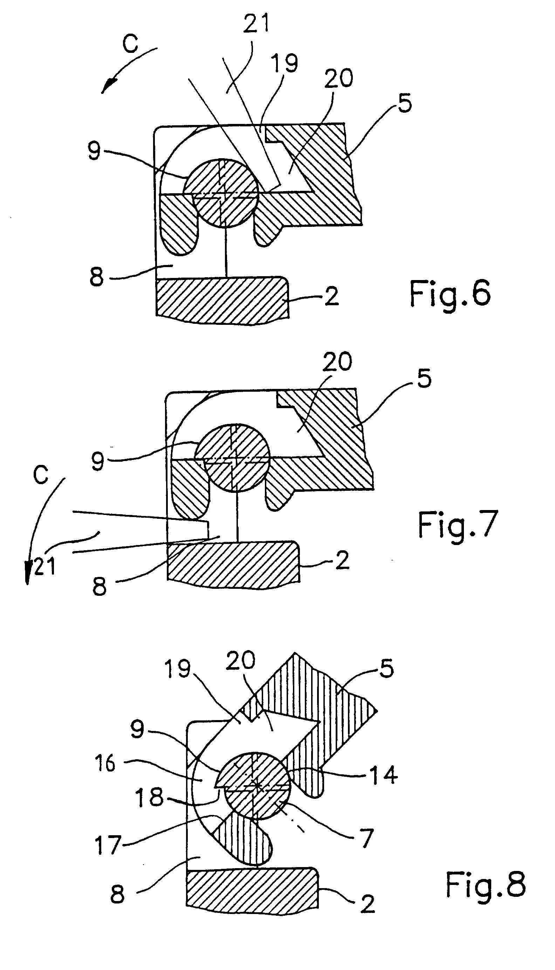

Um die Traverse 5 von der Kettenlasche 2 zu lösen, weist die Aussparung 16 einen Durchbruch 19 auf, der einen Werzeugeingriffsbereich 20 aufweist, wie dies insbesondere aus der Fig. 6 ersichtlich ist. Durch Einbringung eines Werkzeugs 21 in den Durchbruch 19 und den Werkzeugeingriffsbereich 20 kann die Traverse 5 durch eine Bewegung des Werkzeugs 21 in Richtung des Pfeils C von der Traverse 2 gelöst werden.

Eine weitere Möglichkeit, die Traverse 5 von der Kettenlasche 2 zu lösen, zeigt Fig. 7. Ein Werkzeug 21 wird zwischen einen Endabschnitt der Traverse 5 und die Kettenlasche 2 in die Freiarbeitung 8 eingeführt. Durch Hebelwirkung des Werkzeugs 21 wird die Traverse 5 von dem Gelenkzapfen 7 gelöst.

Das zwischen der Traverse 5 und der Kettenlasche 2 ausgebildete Scharnier 10 kann auch zwischen der Traverse 5 und der Kettenlasche 3 ausgebildet sein.

### BEZUGSZEICHENLISTE

- 1: Kettenglied
- 2, 3: Kettenlasche
- 4: Quersteg
- 5: Traverse
- 6, 7: Gelenkzapfen
- 8: Freiarbeitung
- 9: Rastnase
- 10, 11: Scharnier
- 12: Gelenkbohrung
- 13: Gelenkbolzen
- 14: Hinterschneidung
- 15: Ausnehmung
- 16: Aussparung
- 17: Anschlagfläche
- 18: Anschlag
- 19: Durchbruch
- 20: Werkzeugeingriffsbereich
- 21: Werkzeug

## Patentansprüche

1. Kettenglied für eine Energieführungskette, das zwei voneinander beabstandete einander gegenüberliegende Kettenlaschen (2, 3) und wenigstens eine Traverse (5) aufweist, wobei diese mindestens eine Traverse (5) beiderends mit lösbarem Scharnier (10, 11) mit den Kettenlaschen (2, 3) verbindbar ist, und die Traverse (5) mit wenigstens einer Kettenlasche (2) verrastbar ist
**dadurch gekennzeichnet, daß** zur Verrastung wenigstens ein Scharnier (10) durch einen Gelenkzapfen (7) und eine mit dem Gelenkzapfen (7) zusammenwirkende, Hinterschneidungen (14) aufweisende, Ausnehmung (15) gebildet ist, wobei der Gelenkzapfen (7) wenigstens eine in eine Aussparung (16) eingreifende Rastnase (9) aufweist, und die Aussparung (16) sich wenigstens über einen Teilumfang der Ausnehmung (15) erstreckt.

2. Kettenglied nach Anspruch 1, **dadurch gekennzeichnet, daß** der Gelenkzapfen (7) eines jeden Scharniers (10) an der Kettenlasche (2) und die Ausnehmung (15) an der Traverse (5) ausgebildet sind.

3. Kettenglied nach Anspruch 1 oder 2, **dadurch gekennzeichnet, daß** die Aussparung (16) einen Durchbruch (19) mit einem Werkzeugeingriffsbereich (20) bildet.

4. Kettenglied nach Anspruch 1, 2 oder 3, **dadurch gekennzeichnet, daß** die Rastnase (9) sich nur über einen Teil der Länge des Gelenkzapfens (6) erstreckt.

5. Kettenglied nach Anspruch 4, **dadurch gekennzeichnet, daß** die Rastnase (9) symmetrisch bezüglich einer Mittellinie des Gelenkzapfens (7) ausgebildet ist.

6. Kettenglied nach einem der Ansprüche 1 bis 5, **dadurch gekennzeichnet, daß** der Gelenkzapfen (7) einen im wesentlichen kreisförmigen Querschnitt aufweist.

7. Energieführungskette zum Führen von Versorgungsleitungen mit einer Anzahl gelenkig miteinander verbundenen Kettengliedern (1) nach einem der Ansprüche 1 bis 6.

## Claims

1. A chain link member for an energy-carrier chain comprising two spaced apart, oppositely disposed chain plates (2, 3) and at least one transverse portion (5), this at least one transverse portion (5) being connectable at both ends to the chain plates (2, 3) by means of a releasable hinge (10, 11) and the transverse portion (5) being latchable with at least one chain plate (2), **characterized in that** for the latching engagement at least one hinge (10) is formed by a pivot pin (7) and a recess (15) which cooperates with the pivot pin (7) and which has undercuts (14), the pivot pin (7) having at least one latching projection (9) engaging into an opening (16), and the opening (16) extending over at least a part of the periphery of the recess (15).

2. The chain link member according to claim 1, **characterized in that** the pivot pin (7) of each hinge (10) is provided on the chain plate (2) and the recess (15) is provided on the transverse portion (5).

3. The chain link member according to claim 1 or 2, **characterized in that** the opening (16) forms an aperture (19) with a tool engagement region (20).

4. The chain link member according to claim 1, 2 or 3, **characterized in that** the latching projection (9) extends over only a part of the length of the pivot pin (6).

5. The chain link member according to claim 4, **characterized in that** the latching projection (9) is of a symmetrical configuration with respect to a centre line of the pivot pin (7).

6. The chain link member according to one of claims 1 to 5, **characterized in that** the pivot pin (7) is of a substantially circular cross-section.

7. An energy-carrier chain for carrying feed lines with a plurality of chain links (1) being hingedly connected to each other according to one of claims 1 to 6.

## Revendications

1. Chaînon pour chaîne de transport d'énergie, présentant deux éclisses de chaîne (2, 3) opposées à distance l'une de l'autre et au moins une traverse (5), cette au moins une traverse (5) pouvant être liée aux deux extrémités aux éclisses de chaîne (2, 3) au moyen d'une charnière (10, 11) détachable, et la traverse (5) étant enclenchable avec au moins une éclisse de chaîne (2), **caractérisé en ce que** pour l'enclenchement au moins une charnière (10) est formée par un pivot (7) et un dégagement (15) coopérant avec le pivot (7) et présentant des contre-dépouilles (14), le pivot (7) présentant au moins une protubérance d'arrêt (9) s'engageant dans une encoche (16) et l'encoche (16) s'étendant au moins sur une périphérie partielle du dégagement (15).

2. Chaînon selon la revendication 1, **caractérisé en ce que** le pivot (7) de chaque charnière (10) est formé au niveau de l'éclisse de chaîne (2) et le dégagement (15) au niveau de la traverse (5).

3. Chaînon selon la revendication 1 ou 2, **caractérisé en ce que** l'encoche (16) forme un ajour (19) avec une zone à engagement d'outil (20).

4. Chaînon selon la revendication 1, 2 ou 3, **caractérisé en ce que** la protubérance d'arrêt (9) ne s'étend que sur une partie de la longueur du pivot (6).

5. Chaînon selon la revendication 4, **caractérisé en ce que** la protubérance d'arrêt (9) est formée de façon symétrique par rapport à une ligne médiane du pivot (7).

6. Chaînon selon l'une des revendications 1 à 5, **caractérisé en ce que** le pivot (7) présente une section transversale sensiblement en forme de cercle.

7. Chaîne de transport d'énergie pour le transport de lignes d'alimentation avec un nombre de chaînons (1) étant reliés entre-eux de façon articulée selon l'une des revendications 1 à 6.
